Europäisches Patentamt

European Patent Office

Office européen des brevets

Publication number: **0 215 646**
**A2**

# EUROPEAN PATENT APPLICATION

Application number: **86307030.6**

Date of filing: **12.09.86**

Int. Cl.⁴: **G 06 F 15/74**

Priority: 13.09.85 JP 202775/85
13.09.85 JP 202776/85
13.09.85 JP 202777/85
13.09.85 JP 202778/85
13.09.85 JP 202779/85
13.09.85 JP 140495/85
13.09.85 JP 140497/85

Date of publication of application:
25.03.87 Bulletin 87/13

Designated Contracting States: **DE FR GB**

Applicant: **SEIKO INSTRUMENTS & ELECTRONICS LTD.**
31-1, Kameido 6-chome
Koto-ku Tokyo 136 (JP)

Inventor: **Tsubouchi, Junichi**
c/o SEIKO INSTRUMENTS & ELECTRONICS LTD.
31-1, Kameido 6-chome Koto-ku Tokyo (JP)

**Sakami, Yasuo**
c/o SEIKO INSTRUMENTS & ELECTRONICS LTD.
31-1, Kameido 6-chome Koto-ku Tokyo (JP)

**Watanabe, Hiroyuki**
c/o SEIKO INSTRUMENTS & ELECTRONICS LTD.
31-1, Kameido 6-chome Koto-ku Tokyo (JP)

**Okina, Shigetaka**
c/o SEIKO INSTRUMENTS & ELECTRONICS LTD.
31-1, Kameido 6-chome Koto-ku Tokyo (JP)

**Fukushima, Toshitaka**
c/o SEIKO INSTRUMENTS & ELECTRONICS LTD.
31-1, Kameido 6-chome Koto-ku Tokyo (JP)

**Izaki, Shozo**
c/o SEIKO INSTRUMENTS & ELECTRONICS LTD.
31-1, Kameido 6-chome Koto-ku Tokyo (JP)

**Ishizaki, Masao**
c/o SEIKO INSTRUMENTS & ELECTRONICS LTD.
31-1, Kameido 6-chome Koto-ku Tokyo (JP)

Representative: **Caro, William Egerton et al**
J. MILLER & CO. Lincoln House 296-302 High Holborn
London WC1V 7JH (GB)

## Data collecting system.

A data collecting system for collection of data and entry of data to a host computer (1) comprises a portable hand-held data collector for collecting data and for transmitting the data to the exterior. The data collector includes a case (37) of a size and shape to be held in the hand during use, a keyboard (38) for inputting data and having numeral and function keys, a display unit (36) for displaying data, a memory for storing data input by user and an interface (56) for transmitting data stored in the memory to the exterior. A stationary data relay (S) receives data from the data collector and transmits the data to the host computer. The data relay includes a case of a shape to receive the portable data collector thereon, a first interface (14) for receiving the data transmitted from the interface in the data collector and a second interface (13) for communicating bi-directionally to the host computer.

FIG.1

EP 0 215 646 A2

**Description**

DATA COLLECTING SYSTEM

This invention relates to data collecting systems and more particularly, although not so restricted, to portable data collectors which are carried by users to collect the data, the data being transferred to a central processing unit so as to be processed and stored therein.

A conventional data collecting system consists of connecting portable data collectors directly to a central processing unit or host computer via a communication line, in order to transmit and receive the data.

In this conventional data collecting system, however, the portable data collectors are each provided with an interface that connects to a central processing unit. Further, the interfaces that connect to the central processing unit require an interface circuit or a connector that meets ratings such as EIA RS 232C or RS 422, making it difficult to reduce the size and weight or to make the device moisture-proof. Moreover, the data collectors are used as all times and are powered by a cell. To reduce the current consumption by the circuitry, therefore, high frequency clock signals are not used, and the transmission speed of the interfaces is 9600 bps at most. Furthermore, a connector which is attached and detached repeatedly loses reliability. Moreover, since the data is transferred in a one-to-one manner between the portable data collector and the central processing unit, when one portable data collector occupies the central processing unit, the other portable data collectors must wait their turn. Therefore, the efficiency of data transfer is very poor.

Even if the central processing unit transfers the same data to a plurality of portable data collectors, it must do so sequentially and so there is a waste of time if the data being transferred is long.

According to the present invention there is provided a data collecting system for collection of data and entry of said data to a host computer characterised by comprising: a portable hand-held data collector for collecting data and for transmitting said data to the exterior, the data collector including a case of a size and shape to be held in the hand during use, a keyboard having numeral and function keys for inputting data, display means for displaying said data, memory means for storing said data inputted by a user, and interface means for transmitting said data stored in said memory means to the exterior; and a stationary data relay for receiving said data from said data collector and for transmitting said data to said host computer, said data relay including a case of shape to receive said portable data collector thereon, first interface means for receiving said data transmitted from said interface means of said data collector, and second interface means for communicating bi-directionally to the host computer.

The data collecting system may include execution means for executing functions responsive to depressing said function keys, a process memory for storing execution processes and a process correspondence memory for storing correspondence between said function key and function stored in said process memory.

The data collecting system may also include means for supplying new process functions to said process memory, and means for rewriting said correspondence stored in said correspondence memory.

In the preferred embodiment said display means is a multi-character-dot-matrix liquid crystal display arranged to be driven by an AC voltage.

The data collecting system may include means for decreasing the contrast of said display means by decreasing the amplitude of the AC voltage after said data has been transferred to said data relay.

Said second interface means may function as means for transmitting data from said host computer to said portable data collector, and said interface means in said data collector functions as means for receiving said data.

Said interface means in said data collector and said first interface means preferably have respective circuit means for transmitting bi-directionally said data using electromagnetic induction.

Said circuit means, in the preferred embodiment, comprises a tuning circuit having a coil and a capacitor connected in parallel with said coil for generating an electromagnetic field when data is transmitted and for generating an electrical signal by electromagnetic induction when data is received, a transmitting unit for inputting an electric signal to said tuning unit when data is transmitted, and a receiving unit for outputting said electric signal generated in the tuning unit to the exterior of the serial data, said transmitting unit and said receiving unit being coupled together through a capacitor.

Said transmitting means preferably comprises a transmitting transistor and a transistor drive unit connected to the base of said transmitting transistor, said transmitting transistor further constitutes an emitter-grounded circuit, and the collector of said transmitting transistor being connected to said coil of the tuning unit to a diode.

Said receiving unit may comprise a high-pass filter consisting of said capacitor coupling said transmitting unit and said receiving unit and a resistor connected in series, a receiving transistor and a resistor constituting an emitter-grounded circuit, and a clipping diode for protecting the receiving transistor.

Said data relay may further comprise memory means for storing said data.

Said data relay may further comprise means for changing the transmission speed and data format.

The invention is illustrated, merely by way of example, in the accompanying drawings, in which:-

Figure 1 is a diagram of a data collecting system according to the present invention;

Figure 2 is a perspective view of a portable data collector and a data relay of a data collecting system according to the present invention;

Figures 3, 4 and 5 are sectional views of major portions of the data relay of Figure 2;

Figure 6 is a block diagram of the data relay of Figure 2;

Figure 7 is a circuit diagram of part of a serial interface of the data collector of Figure 6;

Figure 8 is a diagram showing the appearance of the portable data collector of Figure 2;

Figure 9 is a sectional view of an input key of the portable collector of Figure 8;

Figure 10 is a functional block diagram of the portable data collector of Figures 8 and 9;

Figure 11 is a flow chart illustrating the process performed by a process select means shown in Figure 10;

Figure 12 is a flow chart illustrating the operation for changing key function in the portable data collector of Figure 10;

Figure 13 is a front view of the portable data collector of Figure 8 showing the arrangement of keys;

Figure 14 is a diagram of key functions that are allotted to the keys of the portable data collector of Figure 8;

Figure 15 is a diagram which illustrates the contents of a key process correspondence memory of the portable data collector of Figure 8;

Figure 16 is a diagram which illustrates partly modified key function of the portable data collector of Figure 8;

Figure 17 is a diagram showing the contents of a key process correspondence memory of the portable data collector of Figure 16;

Figure 18 is a block diagram of a portable data collector of a data collecting system according to the present invention;

Figure 19 is a block diagram of a voltage detector of the portable data collector of Figure 18;

Figure 20 is a block diagram of a display unit of the portable data collector of Figure 18;

Figure 21 is a block diagram of part of a common signal generating circuit of the portable data collector of Figure 18; and

Figure 22 is a timing chart of a common signal and segment signal produced in the portable data collector of Figure 18.

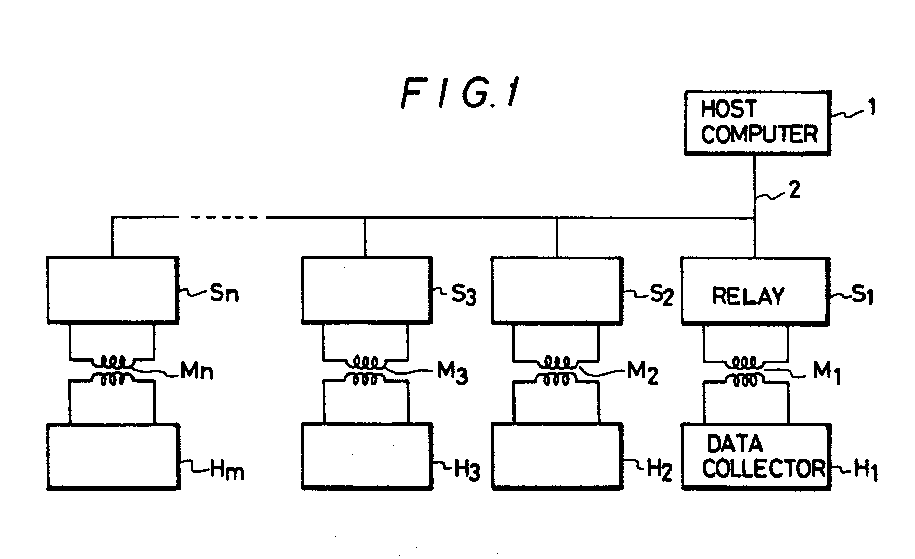

Referring now to Figure 1 of the accompanying drawings there is shown a data collecting system according to the present invention having stationary data relays S1 to Sn placed between portable data collectors H1 to Hm and a central processing unit or host computer 1. The communication is not performed directly between the portable data collectors H1 to Hm and the host computer but is performed relative to the data relays so as to be stored therein, and the data is sent either to the host computer or to the data collectors from the data relays. The communication between the portable data collectors H1 to Hm and the data relays S1 to Sn are performed by electromagnetic induction systems M1 to Mn employing a coil, in order to eliminate connectors and to simplify interface circuitry. When the portable data collectors H1 to Hm are being carried, the data relays S1 to Sn are not coupled to the portable data collectors H1 to Hm, but wait to receive the data. Further, the data relays S1 to Sn and the portable data collectors H1 to Hm can be freely combined, and their numbers can be freely selected.

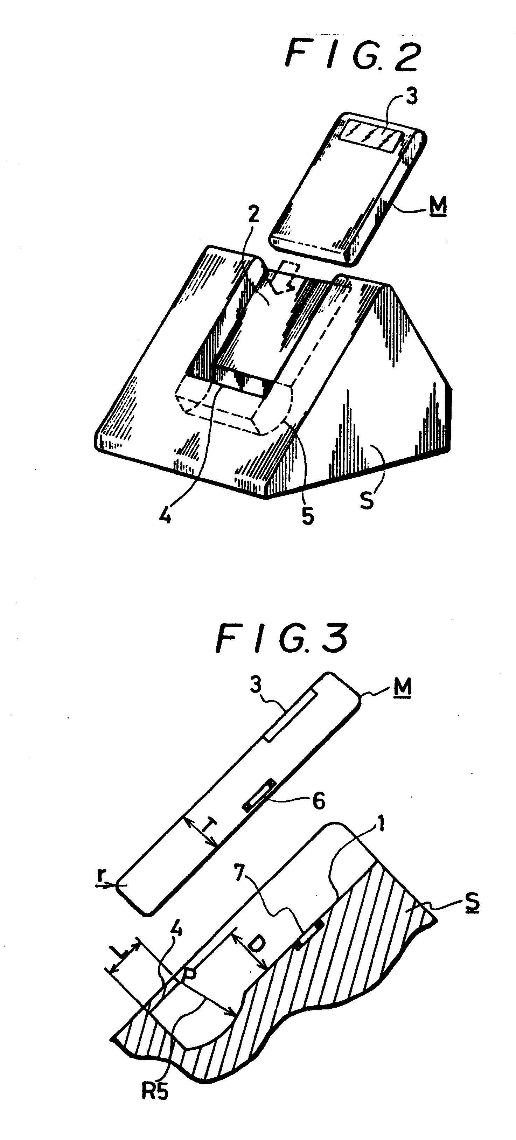

Figure 2 shows one of the portable data collectors M and one of the data relays S. If the portable data collector is inserted and coupled into the data relay S, the data input to the portable data collector is stored in a RAM of the data relay S. The host computer successively asks the data relays S1 to Sn in turn if there is data there via a communication line 2. Only when there is data, the data is transmitted and received between the host computer and the data relay and the data in one of the portable data collectors is sent to the host computer. During this time the other data relays must wait to be placed in communication with the host computer 1. The communication line 2 is formed by either wire or radiowave link. The data relays S1 to Sn are powered by AC power supply or a large capacity DC power supply.

In the above-mentioned system, when data is to be transmitted from a portable data collector to the host computer, both the data collector and the data relay have a coil so that the data is transferred from the data collector to the data relay by the electromagnetic induction system at a speed as low as 2400 bps, and are temporarily stored in the RAM in the data relay and, then, the data is transferred from the data relay to the host computer via the communication line 2 at a speed as high or higher than 9600 bps. In this case, it is also possible to change the data format. When data is to be transferred from the host computer to the portable data collector, the flow of data is reversed. The interface between the portable data collector and the data relay is formed by using a coil in the casing without use of a connector. Therefore, the portable data collector exhibits excellent moisture-proof properties. Further, since there is no connector being attached or detached, the reliability does not deteriorate with age or use. Moreover, since the transmission speed is as low as 2400 bps, clock signal frequency can be maintained relatively low and so power consumption is reduced. It is further possible to use a button-type lithium cell, for example, contributing to reduced size and weight. Further, the communication is effected between the host computer and the data relay at a high speed reducing or eliminating the problem where the communication line is occupied by one of the portable data collectors and the other portable data collectors must wait for transmission or reception of data.

The stationary data relay serves for relaying data bi-directionally between the host computer and portable data collector by setting the portable data collector on a receiving surface 2 of the data relay shown in Figure 2. The receiving surface 2 is inclined by about 30° to 60° so that a display unit 3 can be easily seen by an operator. An overhang 4 is provided at a portion of the data relay S to receive the portable data collector M lying parallel with the receiving surface 2 which is provided with a recess having a curved surface 5 of a radius R with an edge P of the overhang 4 as a centre as shown in Figure 3. The curved surface 5 is a locus that is drawn when the data collector M is pivoted with the edge P of the overhang as a centre.

The data relay and the portable data collector have respectively coils 6,7 for communication therebetween when in a predetermined position relative to each other when the data collector is set on the data relay. Because the receiving surface 2 is inclined, the coil 6 is brought into contact with the receiving surface 2, so that it is placed in position relative to the coil 7.

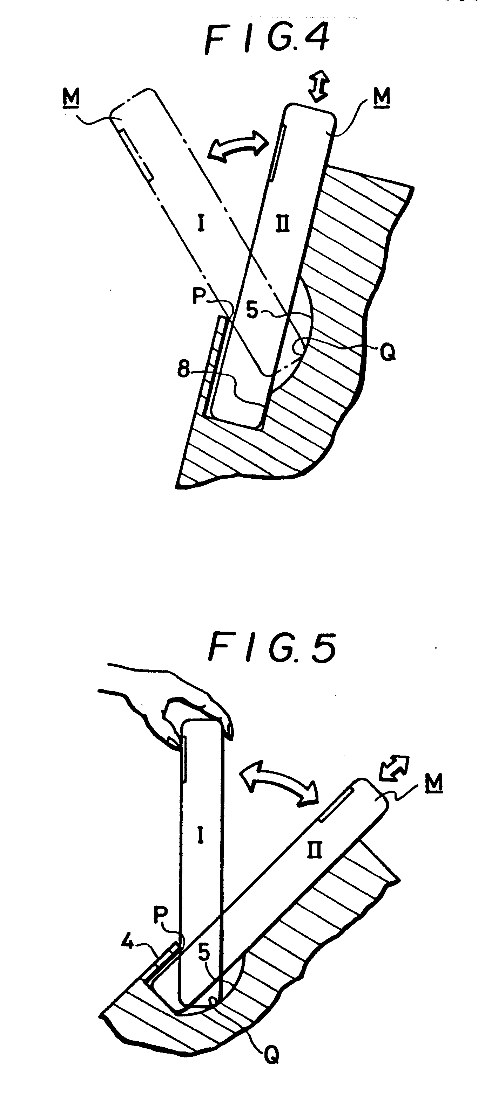

According to this embodiment, the data collector can be attached and detached favourably if the ratios are selected to be T:D:L:R ⊙ 5:6:5:8. Further, the bottom of the portable data collector M is rounded as denoted by r, so that it can be handled easily. Figure 4 is a sectional view of an embodiment where the angle of inclination is 6° to 90° If the angle of inclination is close to 90°, the portable data collector M may fall forwardly. Therefore, a straight portion 8 is provided under the curved surface 5, so that the portable data collector M is prevented from falling forwards by means of the edge P of the overhang 4 and the straight portion 8.

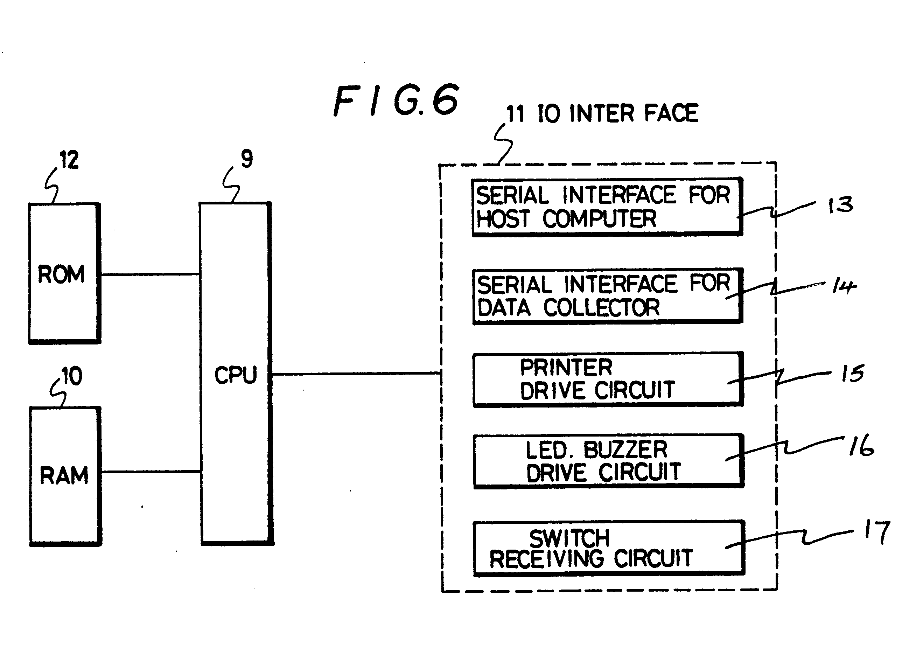

As shown in Figures 4 and 5 the portable data collector M can be inserted in the data relay with an attitude of either I or II. When it is inserted with the attitude I, a portion Q of the portable data collector M slides on the curved surface 5 of the receiving portion, so that the data collector moves from attitude I to attitude II. To remove the portable data collector M from the data relay, it may be tilted forward, i.e. the portable data collector turns with the edge P of the overhang 4 as a centre and is removed without difficulty. Further, the overhang 4 prevents the portable data collector M from escaping.

A block diagram of the stationary data relay is shown in Figure 6. A CPU 9 controls a RAM 10 and an I/O interface 11 in accordance with a program stored in a ROM 12. The data is transferred to, and received from the host computer 1 by a serial interface 13. The data is further transferred to and received from the portable data collector by a serial interface 14. A printer drive circuit 15 executes "handshaking" with a printer and produces a print output. An LED buzzer drive circuit 16 controls an LED and buzzer. A switch receiving circuit 17 informs the CPU 12 of the fact that the switch is depressed.

When it is detected by the switch receiving circuit 17 that the portable data collector is mounted on the data relay, data is transferred to, and received from, the portable data collector via the serial interface 14 and data is received and temporarily stored in the RAM 10. Simultaneously with the above-mentioned procedure or after the above-mentioned procedure has finished, the data is transferred to, and received from, the host computer via the serial interface 13. The LED buzzer drive circuit 16 indicates that the data is being transferred. Moreover, the printer drive circuit 15 outputs messages from the portable data collector, from the central processing unit, or from the data relay to the printer. When an error has developed during this procedure, the LED buzzer drive circuit 16 informs the user of the occurence of the error. If the host computer transfers the same data to a plurality of portable data collectors, the data relay stores perpetually the data sent from the host computer into the RAM and then the data relay transfers the stored data to a plurality of portable data collectors.

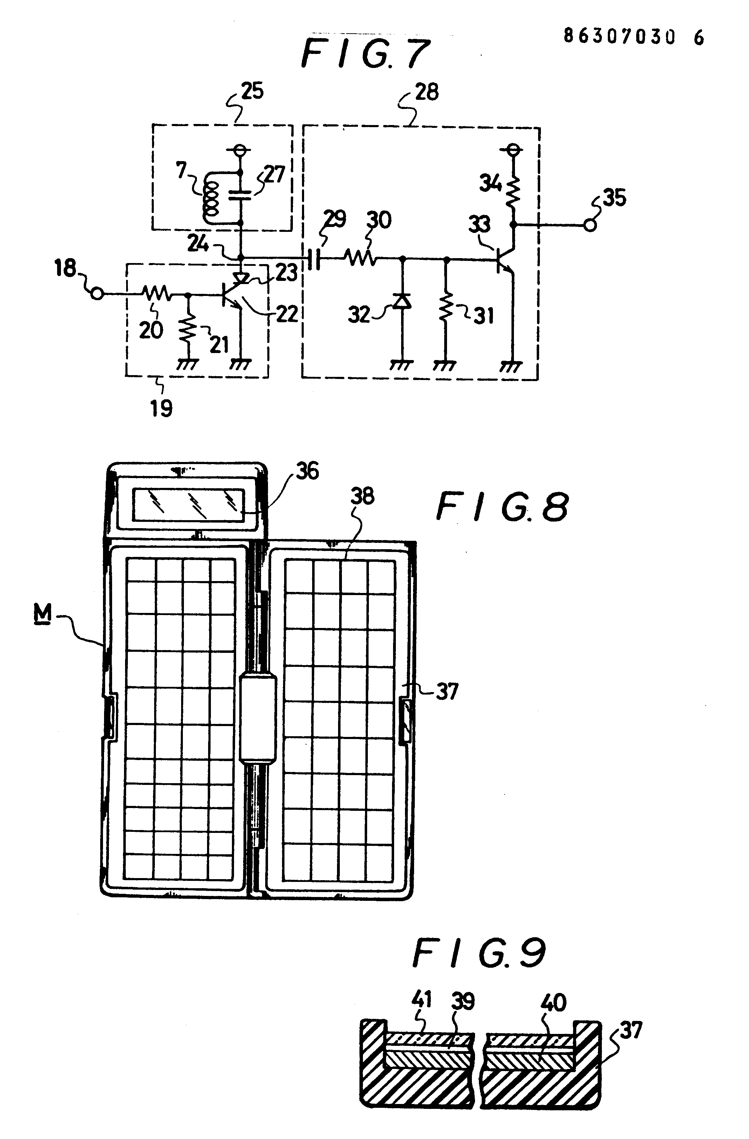

The circuit of the serial interface 13 of the portable data collector is shown in Figure 7. A transmitting terminal 18 for inputting a signal thereto from the CPU, the signal representing the data transmitted to the portable data collector, is connected to a transmitting unit 19 which consists of resistors 20,21, a transmitting transistor 22 and a diode 23. The anode of the diode 23 is connected via a contact point 24 to a tuning circuit 25 which consists of the coil 7 and a tuning capacitor 27 that are connected in parallel with each other.

A receiving circuit 28 comprises a coupling capacitor 29, resistors 30,31, a clipping diode 32, a receiving transistor 33, and a resistor 34, and includes a high-pass filter which consists of the capacitor 29 and the resistors 30,31 and is connected via the contact point 24 to the transmitting unit 19 and to the tuning unit 25. A receiving terminal 35 is connected to the collector of the receiving transistor 14.

The signal input to the transmitting terminal 18 is sent to the base of the transmitting transistor 22 via a transistor drive unit which consists of the resistors 20,21, and causes the transmitting transistor 22 to be switched. When the transmitting transistor 22 is rendered conductive, the contact point 24 assumes ground level. When the transmitting transistor 22 is rendered non-conductive, the contact point 24 assumes a high level to excite the coil 7. Under this condition, the signal is transmitted to the base of the receiving transistor 33 via the coupling capacitor 29, the resistor 30, the clipping diode 32 and the resistor 31, to render the receiving transistor 33 off or on. Consequently, a signal appears on the receiving terminal 35 having a phase opposite to that of the signal input to the transmitting terminal 18. Here, if the contact point 24 is poorly connected or if the coil 7 is broken, the receiving transistor 33 remains non-conductive irrespective of whether the transmitting transistor 22 is rendered conductive or non-conductive, and the signal being transmitted does not appear on the receiving terminal 35.

On the other hand, if an excessive signal is inputted to the transmitting terminal 18 or if supply noise is generated, the diode 23 prevents current flowing from the base to the collector of the transmitting transistor 22.

The serial interface 13 relative to the central processing unit may employ the same circuit as the serial interface 14 described above. Also the serial interface may employ an EIA standardised interface, for example, RS 422 or RS 232C for high speed operation.

The portable data collector M for collecting data and for transmitting data to the stationary data relay S is shown in Figure 8 and has a display unit 36 located on an upper portion of a case 37. The portable data collector also has input keys 38. These input keys 38 are arranged on both sides of the case 37 which is as shown in Figure 8. If a user wants to input data, the user opens the case 37 and depresses the keys 38 appropriately.

Figure 9 is a sectional view of an input key wherein a menu paper 39 describing menus is placed on a membrane switch 40 and the surface of the menu paper is protected by a protecting sheet 41. The menu paper 39 consists of a paper produced from a printer and describes menus that are printed thereon. The protecting sheet 41 has lines to meet the keys of the membrane switches 40. Each key has four menus and any one of them is selected by depressing a select key (not shown) in advance).

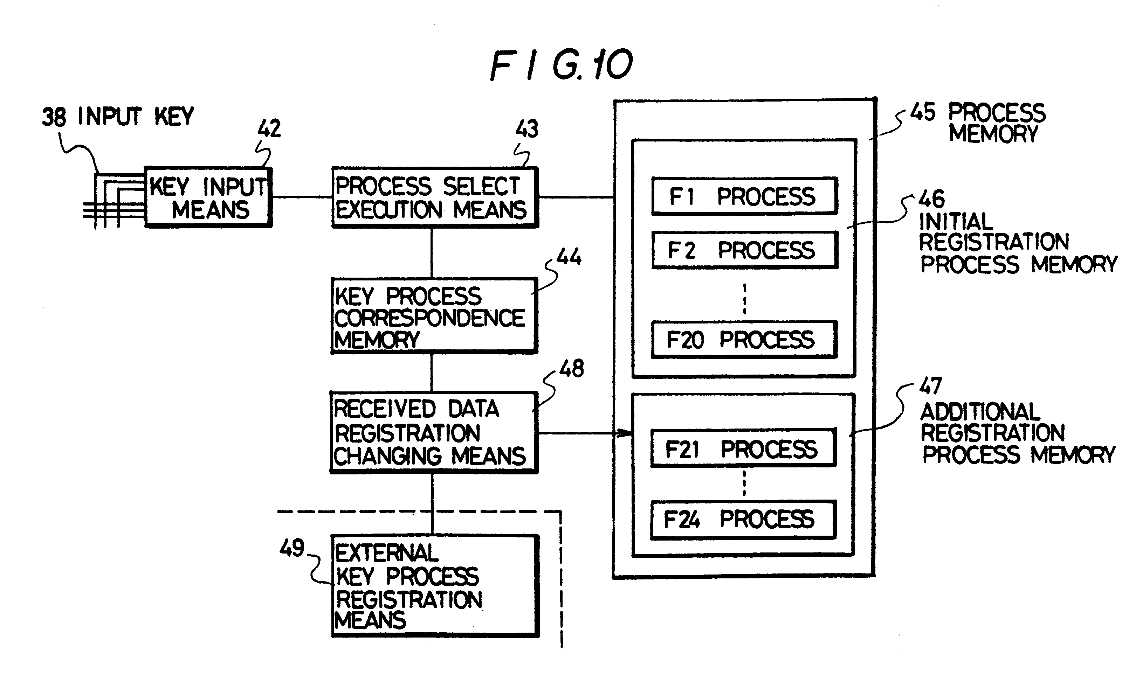

Figure 10 is a function diagram of the portable data collector. The portable data collector registers processes received from an external unit and addresses of processes corresponding to all of the keys in the RAM. The addresses are changed by an external unit, so that the functions of given keys can be changed.

A key input means 42 is connected to a process select execution means 43. A key process correspondence memory 44 and a process memory 45 are also connected to the process select execution means 43. The process memory 45 consists of an initial registration process memory 46 and an additional registration process memory 47. The key process correspondence memory 44 and the additional registration process memory 47 are connected to a received data registration changing means 48 which receives signals sent from an external key process registration means 49.

Now if a key is input from the key input means 42, the process select execution means 43 selects a process that corresponds to that key from the key process correspondence means 44. The content of the selected process is registered in the initial registration process memory 46 or in the additional registration process memory 47 in the process memory 45 and the process select execution means 43 looks in the process memory 45 for a process that is selected from the key process correspondence memory 44 and executes the process. Under the initial condition, there is no content in the additional registration process memory 47. The additional registration process memory 47 is used for the first time when a process is registered therein by the external key process registration means 49 via the received data registration changing means 48. In response to signals from the external key process registration means 49, the received data registration changing means 48 registers the process into the additional registration process memory 47 and changes the content of the key process correspondence memory 44. The key process correspondence memory 44 stores the correspondence of processes relative to the keys. By registering a new process into the additional registration process memory 47 from the external key process registration changing means 49 in order to change the process of the key process correspondence memory 44 relative to the keys, it is possible to change the functions of any keys.

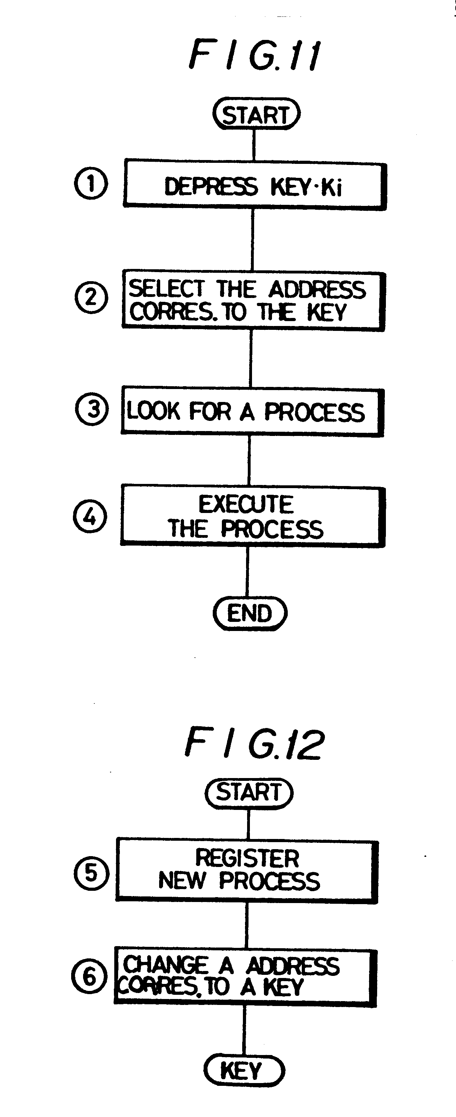

Figure 11 is a flow chart showing the operation of the process selection execution means 43, and Figure 12 is a flow chart of the operation for changing the key functions. The invention will now be explained in conjunction with the flow charts. In Figure 11, a key Ki is depressed at a step (1). The process select execution means 43 selects from the key process correspondence memory 44 the address of a process that corresponds to the key Ki at a step (2). The process select execution means 43 looks in the process memory 45 for a process represented by the address of the selection process at a step (3), and executes the process at a step (4). By changing the address of the process corresponding to the key in the key process correspondence memory 44, therefore, the key function can be changed. When a new function that has not been registered in the process memory 45 is to be possessed by the key, the process should be newly registered from the external key process registration means 49 via the received data registration means 48. In Figure 12, a new process is registered in the additional registration process memory 47 from the external key process changing means 49 via the received data registration changing means 48 at a step (5). Next, at a step (6), a key portion to change the function of the key process correspondence memory 44 is changed into the address of the newly registered process by the external key process changing means 49 via the received data registration changing means 48.

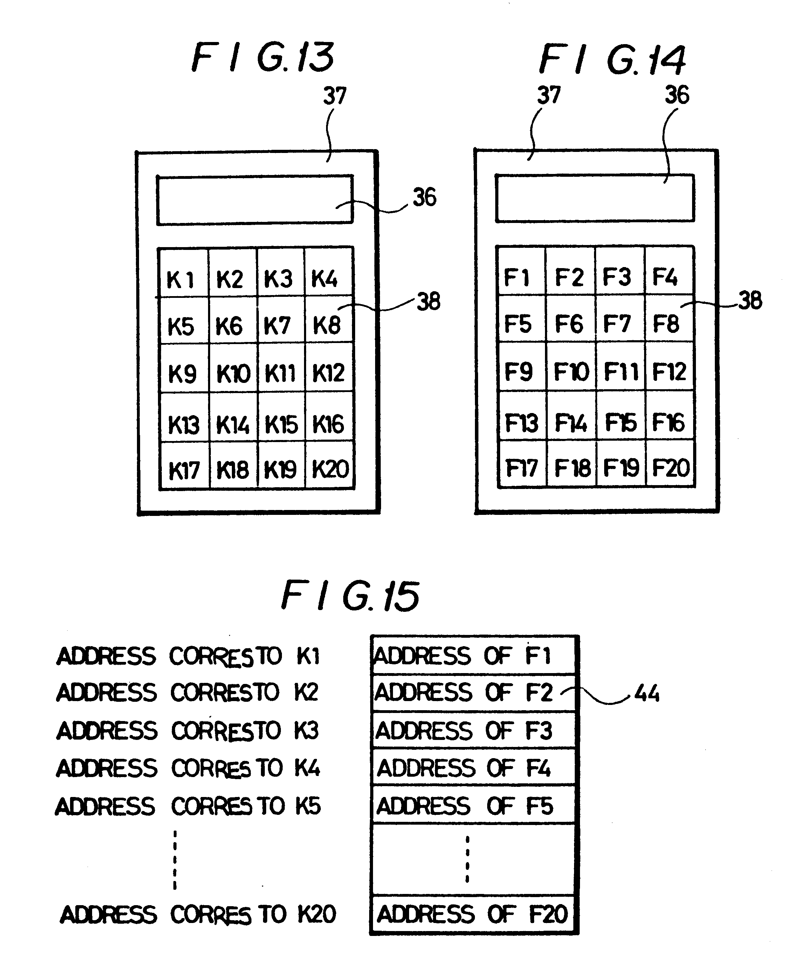

How the key functions are changed will now be described by way of a concrete example shown in Figures 13 to 17. Figure 13 is a diagram of the portable data collector having 20 keys K1 to K20. Figure 14 is a diagram in which functions F1 to F20 are allotted to the keys K1 to K20. That is, Figure 14 describes the functions of the keys in such a manner that a process F1 is performed if the key K1 is depressed, and a process F2 is performed if the key K2 is depressed and so on. Figure 15 shows the contents of the key process correspondence memory 44 that satisfies the key functions of Figure 14. The address of the process F1 enters into a portion where is stored the address of a process that will be executed when the key K1 is depressed. Similarly, the address of the process F2 enters into a portion that corresponds to the key K2. Further, the addresses of processes F1 to F20 are entered to correspond to the keys K1 to K20. The processes F1 to F20 are registered in the initial registration process memory 46 in the process memory 45, but are not registered in the additional registration process memory 47. In practice, any processes may be referred to as the processes F1 to F20; e.g. the key that is registered at first may be processed. If now the key K1 is depressed, this fact is informed from the key input means 42 to the process select execution means 43. The process select execution means 43 selects, from the key process correspondence memory 44, the address of a process that corresponds to the key K1. Here, since the contents of the key process correspondence memory 44 are as shown in Figure 15, the process F1 is selected and is executed. The practical contents of the process F1 are stored in the initial registration process memory in the process memory 45. By forming the key process correspondence memory 44 as shown in Figure 15, the key functions can be arranged as shown in Figure 14.

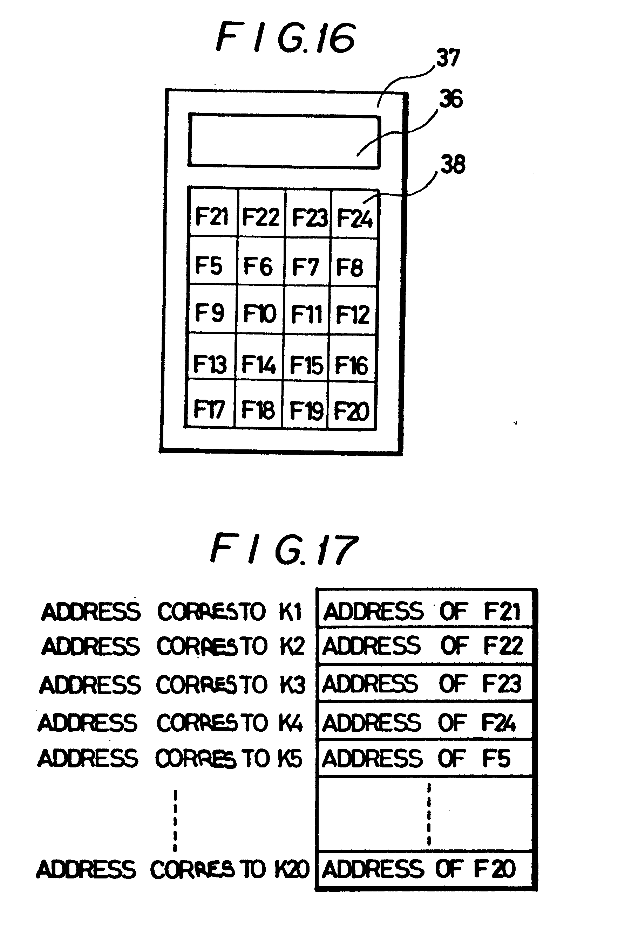

Next, with reference to Figure 16, the processes F5 to F20 are effected in the same manner as described above without changing the functions of the keys K5 to K20, but changing the processes F1 to F4 of the existing functions of the keys K1 to K4 into the processes F21 to F24 that have not been registered in the process memory 45. The processes F21 to F24 are newly registered in the additional registration process memory 47 in the process memory 45 by the external key process registration means 49 via the received data registration changing means 48. The contents of the key process correspondence memory 44 are then changed as shown in Figure 8 by the external key process registration means 49 via the received data registration changing means 48. Namely, the address of process F21 is entered into a portion in which is entered the address of process of key K1, and similarly F22 is entered into K2, F23 is entered into K3 and F24 is entered into K4. Therefore, if the key K1 is depressed, the process select execution means selects the process F21 that corresponds to the key K1 in the key process correspondence memory of Figure 17, and executes the process that is stored in the additional registration process memory 17. The key functions are thus arranged as shown in Figure 16. As described above, new functions can be imparted to given keys by registering processes from an external unit into the additional registration process memory 17 and by changing the contents in the key process corresponence memory 44.

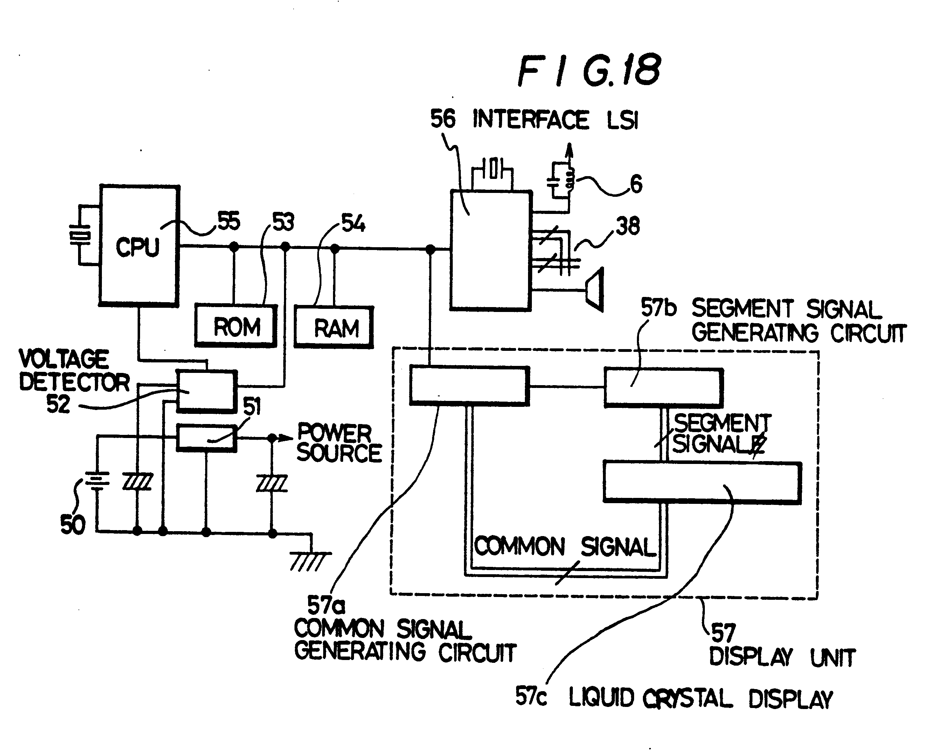

Figure 18 is a circuit block diagram of the portable data collector which achieves the above-mentioned functions. Two high-performance lithium batteries are connected in series to form a cell 50, and a constant voltage of three volts is obtained through a power source circuit 51. The power consumption increases with increase in the power source voltage. As the power source voltage decreases, on the other hand, operational frequency of each IC decreases and the system becomes defective. A voltage of three volts has been found suitable in this instance. A cell voltage detecting circuit 52 detects drop in cell voltage, and is indispensable from the standpoint of collecting the data. Details of the circuit will be described later. A ROM 53 stores an intial program which is necessary for starting the system and a subroutine that is frequently used. Practical procedure for collecting data and items of input keys are all written onto a RAM 54 from the data relay by electromagnetic induction through a coil 6 and an interface LSI that controls the coil 6. A CPU 55 and an interface LSI 56 each have an oscillating circuit, and generate clock signals necessary for driving. The CPU 55 oscillates at about 1 MHz, starts to oscillate only when an interrupt signal is received from the interface LSI 56 in response to key input or transfer of data, and ceases to oscillate after a predetermined process has been completed. The interface LSI 56, on the other hand, oscillates at all times. A cheaply constructed tuning fork-type quartz crystal oscillator which oscilaltes at 38.4 KHz can be used. A tuning fork-type quartz crystal oscillators for time keeping devices oscillating at 32768 Hz are cheapest since they are manufactured in large quantities. However, a quartz crystal oscillator which oscillatores at 38.4 KHz is used when it is required to set the transfer speed relative to the external unit to be an integral multiple (for example 32) of a standard value of 1200 bps. Thus, the oscillating circuit is divided into two and the part on the CPU 55 side is not operated except when required, so that power consumption is greatly reduced on average. The interface LSI 56 further has a communications control function necessary for data communication, a function for controlling the input keys 38, a function for generating an operation confirmation sound signal, and a function for controlling a variety of CPUs 55 and a display unit 57. The volume of operation confirmation sound can be increased or decreased. A circuit for coupling to the data relay may employ the same circuit as shown in Figure 7.

The display unit 57 consists of a common signal generating circuit 57a, a segment signal generating circuit 57b, and a multi-character-dot-matrix liquid crystal display 57c. The liquid crystal display 57c must be driven by AC signals to prevent it from deteriorating, and its contrast is adjusted by changing the amplitude of the AC signals. The portable data collector which has collected the data then transfers the data to an external unit. At this moment, signals are transferred from the interface LSI 56 to the data relay via the coil 6. After the data has been transferred, the contrast is decreased to decrease power consumption by the liquid crystal display 57c.

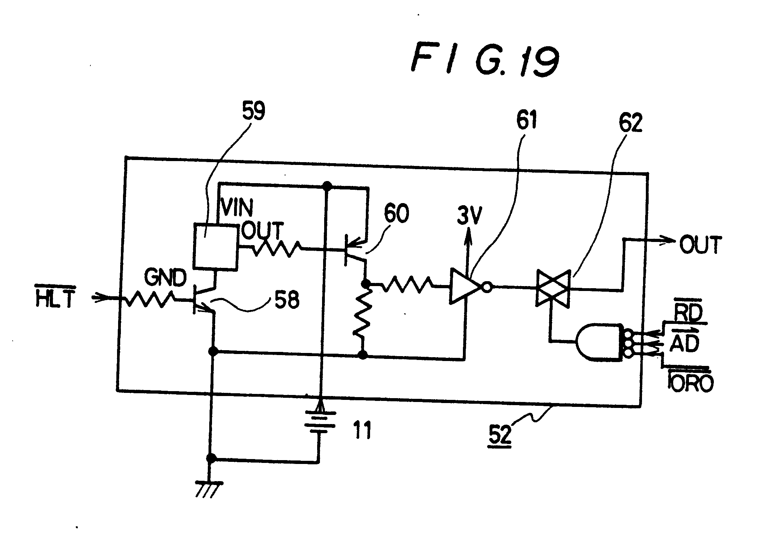

Figure 19 is a diagram which illustrates in detail the cell voltage detecting circuit 52 of Figure 18. When the CPU 55 is not in operation, an HLT signal assumes the "L" level, whereby a transistor 58 is rendered non-conductive to interrupt the supply of power to a voltage detecting element 59 thereby to decrease power consumption. When the power source voltage is greater than about 3.3 volts, the voltage detecting element 59 directly produces the power source voltage. Since a new cell produces a voltage of as great as 6 volts, the voltage detecting element cannot be directly connected to the CPU 55. Therefore, the level is changed through a transistor 60. When the cell voltage is normal, furthermore, the transistor 60 is rendered non-conductive so that no electric current is consumed. When the cell voltage drops to lower than 3.3 volts, the voltage detecting element is not destroyed since a difference is small relative to the power source voltage of an inverter 61 of the next stage. The output of the inverter 61 passes through a CMOS analog switch 62, and is read as an IO output into the data of the CPU 55.

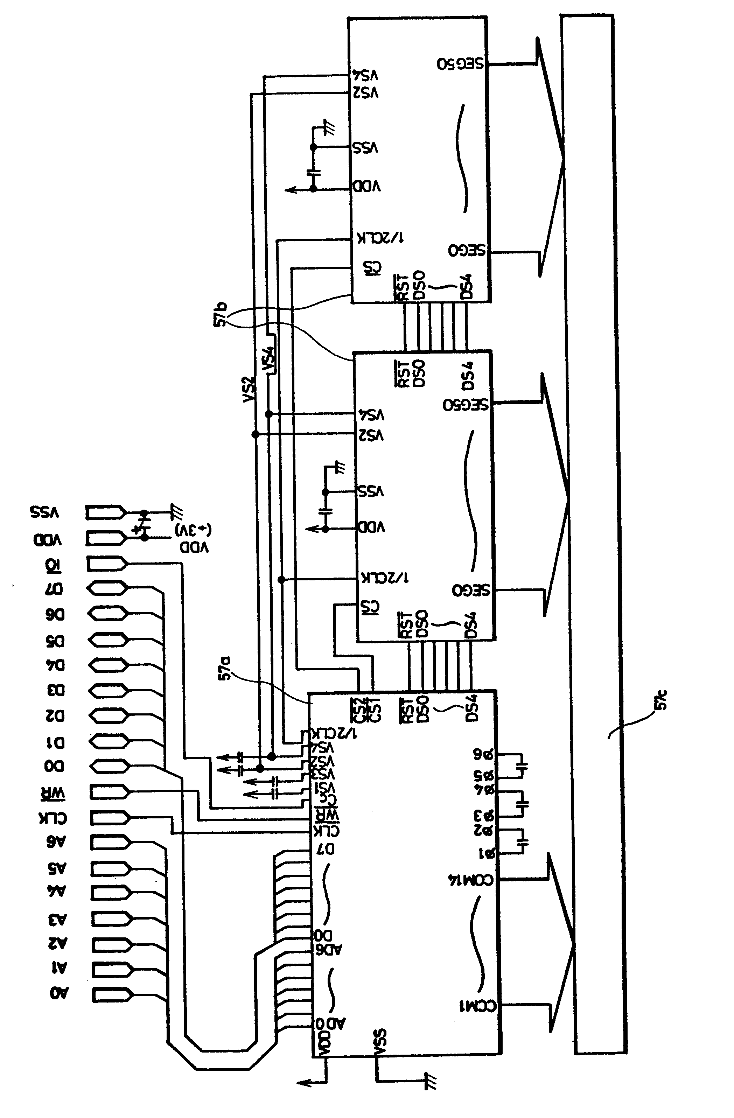

The display unit 57 will now be described in detail with refrence to Figure 20. The common signal generating circuit 57a contains a display RAM and a character ROM (which are not shown), and is connected to the CPU 55 through an address bus, a data bus and other signal lines. As a signal is sent in the form of ACSII codes or the like from the CPU 55, the common signal generating circuit 57a converts it into a character pattern data, latches it, sends the data to the segment signal generating circuit 57b, and generates a common signal which will be sent to the liquid crystal display 57c. In response to the character pattern data from the common signal generating circuit 57a, the segment signal generating circuit 57b generates segment signals that correspond to dots of the liquid crystal display 57c. The contrast is changed by changing the peak values of common signals and segment signals by using a booster circuit in the common signal generating circuit 57a.

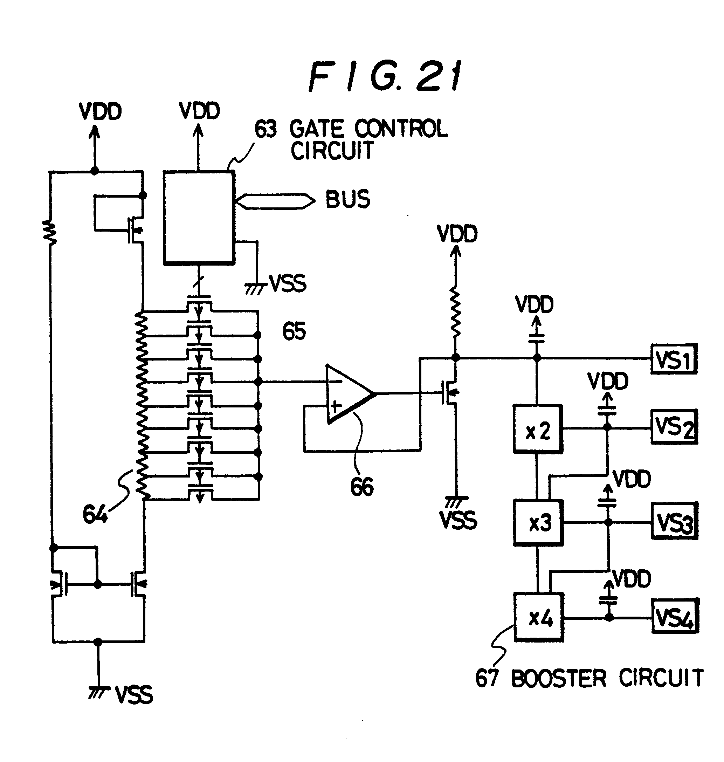

Figure 21 is a diagram illustrating a part of the common signal generating circuit 57a. A gate control circuit 63 operates depending upon the contrast data sent over the address bus and the data bus. A dividing resistor 64 is driven by a constant current, and a potential at a given connection point is taken out by an analog switch 65 controlled by the gate control circuit 63 and by a voltage follower 66.

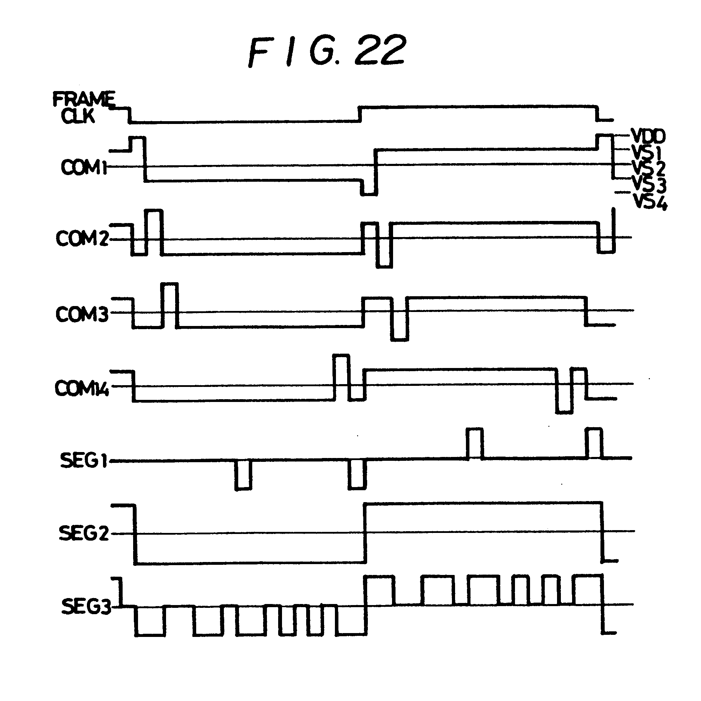

Figure 22 shows common signals and segment signals. The common signals have peak values of four levels and the segment signals have peak values of three levels. The display unit does not turn on when the difference between the signals is one level but turns on when the difference between the signals is four levels.

A liquid crystal display can generally be regarded as a capacitor which, when an AC voltage is applied thereto, permits a current to flow depending on the amplitude and the frequency. An AC voltage of a certain value is normally applied also to those segments of the liquid crystal display that are not turned on, so that current flows through them even when the polarity of the signal is changed. The current that is consumed while the CPU 55 is not in operation consists of a current that flows through the interface LSI 56 and the display unit 57, and a current that flows through the liquid crystal display elements of the liquid crystal display 57c. The liquid crystal display 57c can be considered to be composed of a great number of capacitors, and consumes a large current to produce the display. Considered below is the case where the contrast is decreased. As the output of the booster circuit decreases, peak values of the common signals and the segment signals decrease, whereby the amplitude of the AC voltage applied to the liquid crystal display elements decreases and the current flowing though them decreases. This is the condition where the contrast is decreased. Here, attention should be given to the fact that a DC voltage should not be applied to the liquid crystal display elements to prevent them from deteriorating.

The CPU 55 operates for a very short period of time, and an average current is considerably smaller than that which flows into the CPU 55 when it is not in operation. Therefore, to decrease the current that is consumed when the CPU 55 is not in operation serves as a key to the system.

The cell life will be calculated below based upon a practical example.

(1) It is presumed that the data is input and is transferred requiring a time of 1 hour.

(2) The CPU consumes a current of 1.2 mA when it is in operation. In the portable data collector which consumes a small curent, however, the CPU is not usually in operation.

(3) When the CPU is not in operation, the current being consumed is 40 $\mu$A when the contrast is the greatest and is 20 $\mu$A when the contrast is the smallest.

(4) If the CPU operates for 100 seconds a day, the average current that is consumed is calculated as follows:

In the case of non-changing the contrast
100 sec. $\times$ 1.2 mA/86400 sec. + 40 $\mu$A = 41.39 $\mu$A
In the case of changing the contrast
100 sec. $\times$ 1.2 mA/86400 sec. + $(20 \times \frac{23}{24} + 40 \times \frac{1}{24})$ $\mu$A
= 23.61 $\mu$A.

(5) When a cell having a capacity of 120 mAh is used, the serviceable life is calculated as follows:
In the case of non-changing the contrast

$$\frac{120 \times 10^{-3}}{41.39 \times 10^{-6}} \div 24 \fallingdotseq 121 \text{ days}$$

In the case of changing the contrast

$$\frac{120 \times 10^{-3}}{23.61 \times 10^{-6}} \div 24 \fallingdotseq 212 \text{ days}$$

## Claims

1. A data collecting system for collection of data and entry of said data to a host computer (1) characterised by comprising: a portable hand-held data collector for collecting data and for transmitting said data to the exterior, the data collector including a case (37) of a size and shape to be held in the hand during use, a keyboard (38) having numeral and function keys for inputting data, display means (36) for displaying said data, memory means for storing said data inputted by a user, and interface means (56) for transmitting said data stored in said memory means to the exterior; and a stationary data relay (S) for receiving said data from said data collector and for transmitting said data to said host computer, said data relay including a case of shape to receive said portable data collector thereon, first interface means (14) for receiving said data transmitted from said interface means of said data collector, and second interface means (13) for communicating bi-directionally to the host computer.

2. Data collecting system as claimed in claim 1 characterised by including execution means (43) for

7

executing functions responsive to depressing said function keys, a process memory (45) for storing execution processes and a process correspondence memory (44) for storing correspondence between said function key and function stored in said process memory.

3. Data collecting system as claimed in claim 2 characterised by including means (49) for supplying new process functions to said process memory, and means (48) for rewriting said correspondence stored in said correspondence memory.

4. Data collecting system as claimed in any of the preceding claims characterised in that said display means (45) is a multi-character-dot-matrix liquid crystal display (57c) arranged to be driven by an AC voltage.

5. Data collecting system as claimed in claim 4 characterised by means for decreasing the contrast of said display means by decreasing the amplitude of the AC voltage after said data has been transferred to said data relay.

6. Data collecting system as claimed in any preceding claim characterised in that said second interface means (13) functions as means for transmitting data from said host computer to said portable data collector, and said interface means (56) in said data collector functions as means for receiving said data.

7. Data collecting system as claimed in any preceding claim characterised in that said interface means (56) in said data collector and said first interface means (14) have respective circuit means (6,7) for transmitting bi-directionally said data using electromagnetic induction.

8. Data collecting system as claimed in claim 7 characterised in that said circuit means comprises a tuning circuit (25) having a coil (6) and a capacitor (27) connected in parallel with said coil for generating an electromagnetic field when data is transmitted and for generating an electrical signal by electromagnetic induction when data is received, a transmitting unit (19) for inputting an electric signal to said tuning unit (25) when data is transmitted, and a receiving unit (28) for outputting said electric signal generated in the tuning unit to the exterior of the serial data, said transmitting unit and said receiving unit being coupled together through a capacitor (29).

9. Data collecting system as claimed in claim 8 characterised in that said transmitting unit (19) comprises a transmitting transistor (22) and a transistor drive unit (20,21) connected to the base of said transmitting transistor, said transmitting transistor further constitutes an emitter-grounded circuit, and the collector of said transmitting transistor being connected to said coil (6) of the tuning unit (25)to a diode (23).

10. Data collecting system as claimed in claim 8 or 9 characterised in that the receiving unit (28) comprises a high-pass filter consisting of said capacitor (29) coupling said transmitting unit (19) and said receiving unit (28) and a resistor (30) connected in series, a receiving transistor (33) and a resistor (31) constituting an emitter-grounded circuit, and a clipping diode (32) for protecting the receiving transistor.

11. Data collecting system as claimed in any preceding claim characterised in that said data relay further comprises memory means for storing said data.

12. Data collecting system as claimed in any preceding claim characterised in that said data relay further comprises means for changing the transmission speed and data format.

# F I G.1

# F I G.2

# F I G.3

# FIG.4

M          M

I    II

P

5

8          Q

# FIG.5

I    II

P

4   5

Q

M

## F I G.6

11 IO INTER FACE

| | |
|---|---|
| 12 | |
| ROM | |
| 9 | CPU |
| 10 | |
| RAM | |

SERIAL INTERFACE FOR HOST COMPUTER — 13

SERIAL INTERFACE FOR DATA COLLECTOR — 14

PRINTER DRIVE CIRCUIT — 15

LED. BUZZER DRIVE CIRCUIT — 16

SWITCH RECEIVING CIRCUIT — 17

86307030 6

# FIG.7

# FIG.8

# FIG.9

# F I G.10

38 INPUT KEY

42 KEY INPUT MEANS

43 PROCESS SELECT EXECUTION MEANS

44 KEY PROCESS CORRESPONDENCE MEMORY

48 RECEIVED DATA REGISTRATION CHANGING MEANS

49 EXTERNAL KEY PROCESS REGISTRATION MEANS

45 PROCESS MEMORY

F1 PROCESS

F2 PROCESS

F20 PROCESS

46 INITIAL REGISTRATION PROCESS MEMORY

F21 PROCESS

F24 PROCESS

47 ADDITIONAL REGISTRATION PROCESS MEMORY

# F I G. 11

```
                    (START)
                       │
  ①  ┌─────────────────────────┐
      │   DEPRESS KEY·Ki        │
      └─────────────────────────┘
                       │
  ②  ┌─────────────────────────┐
      │ SELECT THE ADDRESS      │
      │ CORRES. TO THE KEY      │
      └─────────────────────────┘
                       │
  ③  ┌─────────────────────────┐
      │ LOOK FOR A PROCESS      │
      └─────────────────────────┘
                       │
  ④  ┌─────────────────────────┐
      │       EXECUTE           │
      │     THE PROCESS         │
      └─────────────────────────┘
                       │
                     (END)
```

# F I G. 12

```
                    (START)
                       │
  ⑤  ┌─────────────────────────┐
      │      REGISTER           │
      │    NEW PROCESS          │
      └─────────────────────────┘
                       │
  ⑥  ┌─────────────────────────┐
      │ CHANGE A ADDRESS        │
      │ CORRES. TO A KEY        │
      └─────────────────────────┘
                       │
                     (KEY)
```

## F I G. 13

| | | | |
|---|---|---|---|
| K1 | K2 | K3 | K4 |
| K5 | K6 | K7 | K8 |
| K9 | K10 | K11 | K12 |
| K13 | K14 | K15 | K16 |
| K17 | K18 | K19 | K20 |

37

36

38

## F I G. 14

| | | | |
|---|---|---|---|
| F1 | F2 | F3 | F4 |
| F5 | F6 | F7 | F8 |
| F9 | F10 | F11 | F12 |
| F13 | F14 | F15 | F16 |
| F17 | F18 | F19 | F20 |

37

36

38

## F I G. 15

| ADDRESS CORRES TO K1 | ADDRESS OF F1 |
|---|---|
| ADDRESS CORRES TO K2 | ADDRESS OF F2 |
| ADDRESS CORRES TO K3 | ADDRESS OF F3 |
| ADDRESS CORRES TO K4 | ADDRESS OF F4 |
| ADDRESS CORRES TO K5 | ADDRESS OF F5 |
| ⋮ | ⋮ |
| ADDRESS CORRES TO K20 | ADDRESS OF F20 |

44

# F I G. 16

| | | | |
|---|---|---|---|
| F21 | F22 | F23 | F24 |
| F5 | F6 | F7 | F8 |
| F9 | F10 | F11 | F12 |
| F13 | F14 | F15 | F16 |
| F17 | F18 | F19 | F20 |

37
36
38

# F I G. 17

| | |
|---|---|
| ADDRESS CORRES TO K1 | ADDRESS OF F21 |
| ADDRESS CORRES TO K2 | ADDRESS OF F22 |
| ADDRESS CORRES TO K3 | ADDRESS OF F23 |
| ADDRESS CORRES TO K4 | ADDRESS OF F24 |
| ADDRESS CORRES TO K5 | ADDRESS OF F5 |
| ⋮ | ⋮ |
| ADDRESS CORRES TO K20 | ADDRESS OF F20 |

F I G.18

56 INTERFACE LSI

CPU 55 53 54

ROM RAM

6

38

VOLTAGE DETECTOR 52

51

POWER SOURCE

50

57b SEGMENT SIGNAL GENERATING CIRCUIT

SEGMENT SIGNAL

COMMON SIGNAL

57a COMMON SIGNAL GENERATING CIRCUIT

57c LIQUID CRYSTAL DISPLAY

57 DISPLAY UNIT

86307030 6

# F I G. 19

A0 A1 A2 A3 A4 A5 A6 CLK WR D0 D1 D2 D3 D4 D5 D6 D7 CS VDD VSS

VDD (~3V)

57a

VS2

57b

VS4

VDD AD0 AD6 D0 D7 CLK WR CS VS1 VS2 VS3 VS4 1/2CLK

CS2 CS3 CS1

VSS

RST DS0 DS4

COM1 COM14

P1 P2 P3 P4 P5 P6

CS 1/2CLK VDD VSS VS2 VS4

RST DS0 DS4 SEG0 SEG50

CS 1/2CLK VDD VSS VS2 VS4

RST DS0 DS4 SEG0 SEG50

57c

# F I G. 21

63 GATE CONTROL CIRCUIT

67 BOOSTER CIRCUIT

86307030 6

# F I G. 22

FRAME CLK

COM1 — VDD, VS1, VS2, VS3, VS4

COM2

COM3

COM14

SEG1

SEG2

SEG3